# EUROPEAN PATENT SPECIFICATION

(11) **EP 3 559 012 B1**
(45) Date of publication and mention of the grant of the patent: **01.11.2023**
(21) Application number: 17821616.4
(22) Date of filing: 19.12.2017
(51) Int. Cl.: C07F 15/00, B01J 31/22, C07B 37/04

(54) **METAL ORGANIC COMPOUNDS**
METALLORGANISCHE VERBINDUNGEN
COMPOSÉS ORGANOMÉTALLIQUES

(30) Priority: 22.12.2016 EP 16206466
(43) Date of publication of application: 30.10.2019
(73) Proprietor: Umicore AG & Co. KG, 63457 Hanau-Wolfgang (DE)
(72) Inventor: NOLAN, Steven P., 9000 Zwijnaarde (BE)
(86) International application number: PCT/EP2017/083666
(87) International publication number: WO 2018/115029

(56) References cited:
- VICIU M S ET AL: "SYNTHETIC AND STRUCTURAL STUDIES OF (NHC)PD(ALLYL)CL COMPLEXES (NHC = N-HETEROCYCLIC CARBENE)", ORGANOMETALLICS, AMERICAN CHEMICAL SOCIETY, US, vol. 23, no. 7, 29 March 2004 (2004-03-29) , pages 1629-1635, XP001192655, ISSN: 0276-7333
- NAVARRO O ET AL: "General and efficient methodology for the Suzuki-Miyaura reaction in technical grade 2-propanol", JOURNAL OF ORGANOMETALLIC CHEMIS, ELSEVIER-SEQUOIA S.A. LAUSANNE, CH, vol. 689, no. 23, 15 November 2004 (2004-11-15), pages 3722-3727, XP004629413, ISSN: 0022-328X

## Description

Palladium based catalysts have been of increasing interest in the past for various purposes and applications.

Heck reaction *(*Dieck, H. A.; Heck, R. F. "Organophosphinepalladium complexes as catalysts for vinylic hydrogen substitution reactions". Journal of the American Chemical Society. 1974, 96 (4), 1133), Stille *reaction (*Kosugi, M.; Sasazawa, K.; Shikizu, Y.; Migita, T. Chem. Lett., 1977, 6, 301-302.*)*, Suzuki reaction *(*Advanced Organic Chemistry, Springer, 2007, 739-747*)*, Negishi coupling (Journal of the Chemical Society Chemical Communications 1977, (19), 683.) and Buchwald-Hartwig amination are well-known examples of reactions making use of such catalysts. Synthetic and structural studies of Pd (N-heterocyclic carbene)(allyl)Cl complexes are disclosed in Organometallics 2004, 23, 1629-1635.

Various different ligands have been described that can be employed for many or all of the above reactions.

For some reaction procedures it is desirable to employ a stable pre-catalyst which can be activated or converted to the catalytically active species in a simple manner. This object is solved by a palladium complex of formula 2 or 3 as defined in claim 1.

This complex is an air-stable compound allowing storage and handling under a variety of conditions. It can be converted to a known catalytically active species by conversion with a base.

### Short Description of the Invention

1. A compound of formula 2 or 3 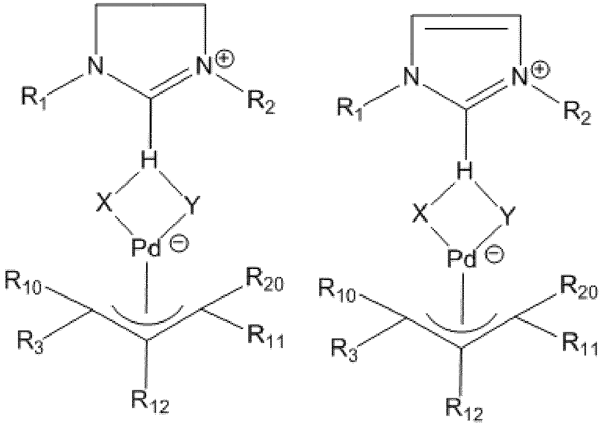
   wherein R3, R11 and R12 being selected from the group consisting of hydrogen, methyl, ethyl, propyl, isopropyl, butyl, tert.-butyl, sec.-butyl, phenyl, naphthyl or combinations thereof;
   R10 and R20 are hydrogen or R10 and R20 are forming a five or six-membered unsaturated ring suitable for η3-coordination of the palladium, the five or six-membered unsaturated ring may be fused with at least one benzene ring;
   X and Y are the same and are halogen, acetate, fluoroacetate, tetra-fluoroborate;
   wherein R1 and R2 are each independently selected from the group consisting of formula 4 to formula 8 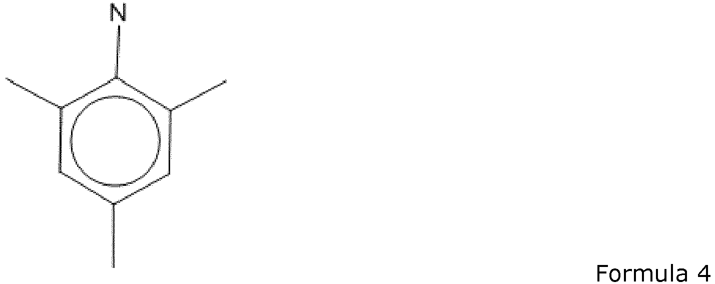
   2,4,6-trimethylphenyl 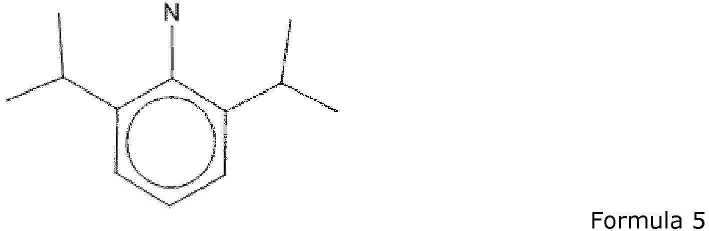
   2,6-diisopropylphenyl 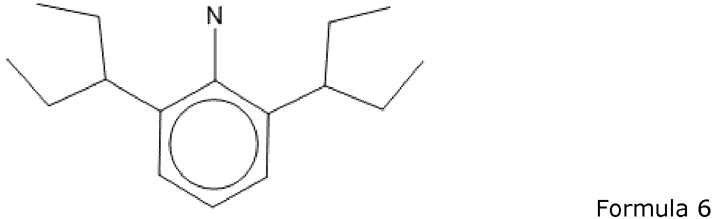
   2,6-bis(diethylmethyl)-phenyl 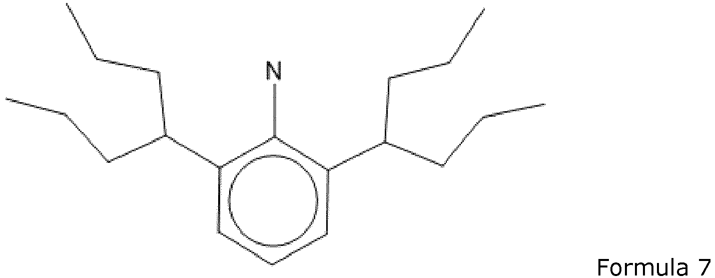
   2,6-bis(dipropylmethyl)-phenyl 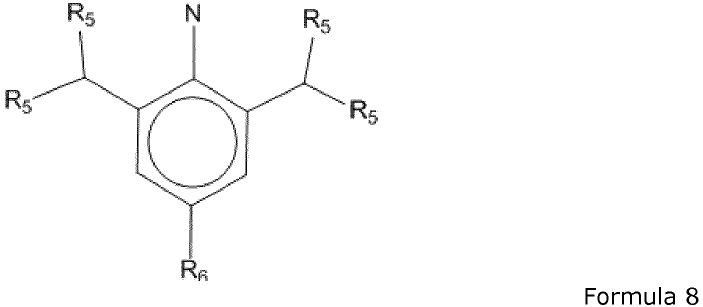
   2,6-bis(diphenylmethyl)-4-methylphenyl, 2,6-bis(diphenylmethyl)-4-methoxyphenyl, 2,6-bis(dinaphthylmethyl)-4-methylphenyl wherein R5 is phenyl, naphthyl, R6 is hydrogen, methyl or methoxy and N indicates the nitrogen atom of the heterocyclic ring in formulae 1 to 3 to which the substituted aryl ring is linked.
2. A compound according to point 1, R1 and R2 being the same.
3. A compound according to any of points 1 to 2, R12 being hydrogen.
4. A compound according to any of points 1 to 3, R11 being hydrogen.
5. A compound according to any of points 1 to 4, R3 being selected from the group consisting of hydrogen, methyl, ethyl, propyl, isopropyl, butyl, tert.-butyl, sec.-butyl, phenyl, naphthyl or combinations thereof, R11 and R12 being hydrogen and R10 and R20 together form a five membered unsaturated ring fused with a benzene ring so as to form an indene ring system.
6. A compound according to any the points 1 to 5, wherein the group R3R10-(allyl-R12)-R11R20 can be cinnamyl or allyl or of formula 10 as illustrated page 16 of the description.
7. A method for making compounds of any of points 1 to 6, wherein an imidazolium salt is reacted with the palladium dimer [Pd(R3R10-(allyl-R12)-R11R20)(µ-X)]₂ in a solvent, wherein R3 and X are as defined above.
8. The method of point 7, the solvent being a hydrocarbon, halogenated hydrocarbon or polar solvent, specifically straight-chained or cyclic haloalkyl, ether, ketone or combinations thereof.
9. The method of point 7 or 8, wherein the reaction temperature is from 20°C to 111°C, in particular from 40°C to 90°C.
10. The method of any of points 7 to 9, wherein the reaction time is from 30 minutes to 24 hours, in particular from 1 hour to 5 hours.
11. The method of any of points 7 to 10, the compound R3R10-(allyl-R12)-R11R20 being a compound of formula 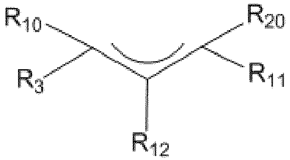 with R3, R10, R11, R12 and R20 as defined above.
12. A method of making a complex of the type [Pd(NHC)(R3R10-(allyl-R12)-R11R20)X] comprising the steps of
   - providing a compound according to any of points 1 to 6;
   - reacting said compound with a base in the presence of a solvent;
   - optionally isolating the resulting [Pd(NHC)(R3R10-(allyl-R12)-R11R20)X],
   wherein NHC is the corresponding NHC ligand of the compound according to any of points 1 to 5 and X and R3 are defined as above.
13. The method of point 12, wherein the solvent is a polar-aprotic solvent or a polar-protic solvent, in particular a haloalkane, an aromatic solvent such as benzene, toluene or xylene, ethers such as diethyl ether, tetrahydrofurane or MTBE, ketones such as acetone or C2 to C6 alcohols such as ethanol, isopropanol or n-butanol.
14. The method of point 12 or 13, the base being a basic metal compound or an organic base, in particular an alkaline or earth-alkaline compound.
15. The method of any of points 12 to 14, the base being an alkaline or earth-alkaline oxide, hydroxide or carbonate or an amine, in particular potassium carbonate, sodium carbonate, potassium hydroxide, sodium hydroxide, pyridine or triethylamine.

### Detailed Description of the Invention

The present invention relates to a compound of formula 2 or 3 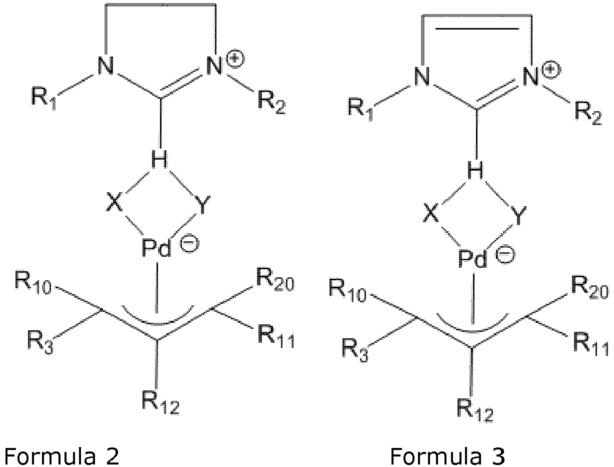 wherein R1, R2, R3, R11, R12, R10, R20, X and Y are as defined above.

As for the NHC ligand employed, in general all common NHC ligands can be used for specific purposes. If common ligands of this group of ligands are used, R1 and R2 are each independently selected from the group consisting of formula 4 to formula 8

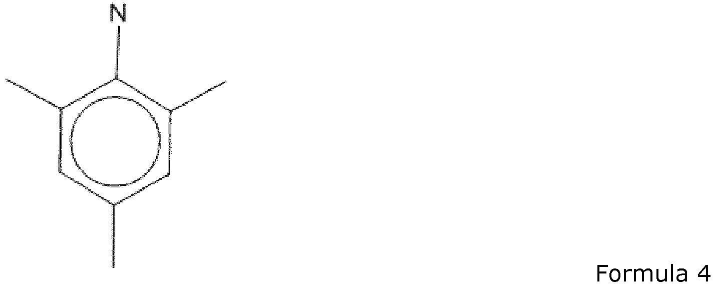

### 2,4,6-trimethylphenyl

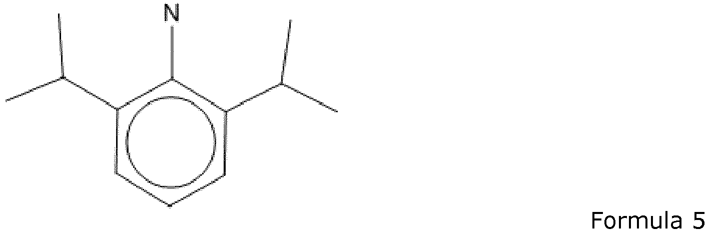

### 2,6-diisopropylphenyl

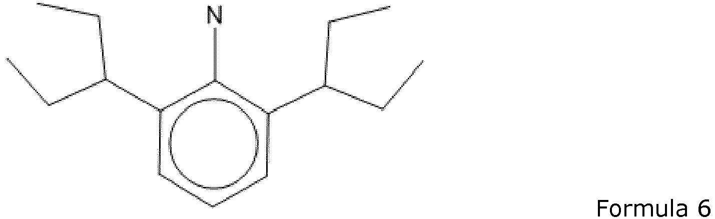

### 2,6-bis(diethylmethyl)-phenyl

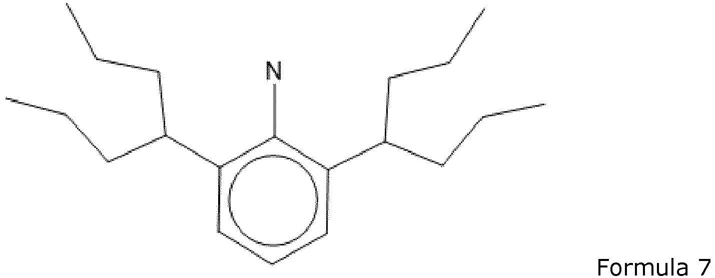

### 2,6-bis(dipropylmethyl)-phenyl or

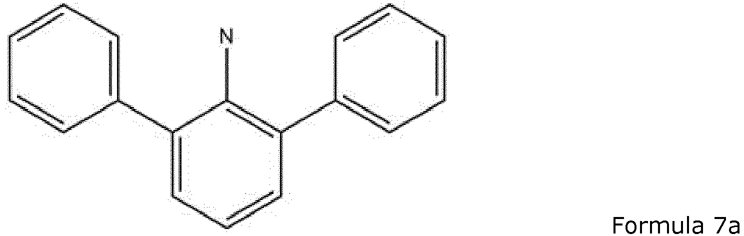

or 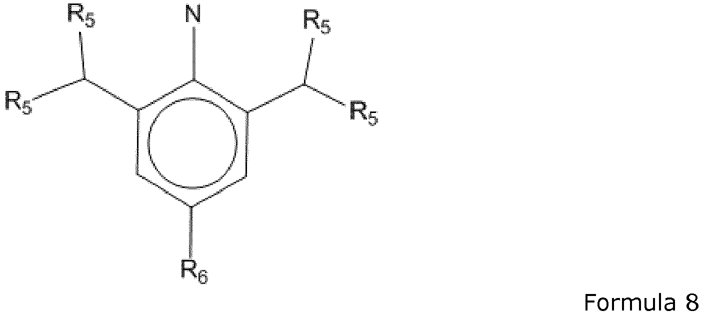 wherein, in Formula 8, R5 is aryl, in particular phenyl or naphthyl, R6 is hydrogen, alkyl or alkoxy, such as methyl or methoxy and N indicates the nitrogen atom of the heterocyclic ring in formulae 1 to 3 to which the substituted aryl ring selected from the groups listed above is linked. R1 and R2 may be selected independently and thus can be different from each other, but it is common if they are the same. Specifically, Formula 8 can be 2,6-bis(diphenylmethyl)-4-methylphenyl, 2,6-bis(diphenylmethyl)-4-methoxyphenyl, 2,6-bis(dinaphthylmethyl)-4-methylphenyl, 2,6-bis(dinaphthylmethyl)-4-methoxyphenyl.

In this compound, the palladium (Pd) is also coordinated by a compound that can be described as R3R10-(allyl-R12)-R11R20 that has the structure of formula 9 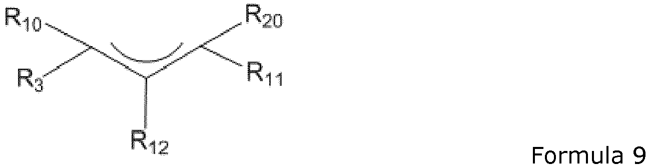 wherein R3,R10,R11,R12 and R20 are defined as above.

The group R3R10-(allyl-R12)-R11R20 can be, for example, cinnamyl or allyl. It can also be a substituted or unsubstituted indene, such as a compound of formula 10.

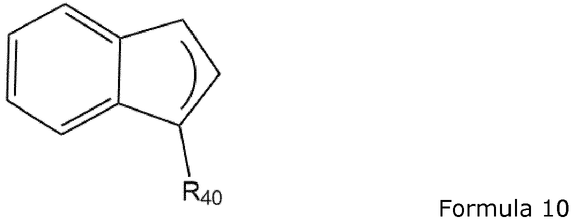

In this compound of Formula 10, R40 can be hydrogen, substituted or unsubstituted alkyl as well as substituted or unsubstituted aryl, more specifically phenyl, naphthyl, p-methylphenyl, methyl, ethyl propyl, isopropyl, butyl or tert.-butyl.

The compounds of formula 2 or 3 can be made by a method wherein a salt of the respective NHC ligand, usually an imidazolium salt, is reacted with the palladium dimer [Pd(R3R10-(allyl-R12)-R11R20)(µ-X)]₂ in a solvent, wherein R3, R10, R11, R12, R20 and X are as defined above.

This reaction can be illustrated by the following equation:

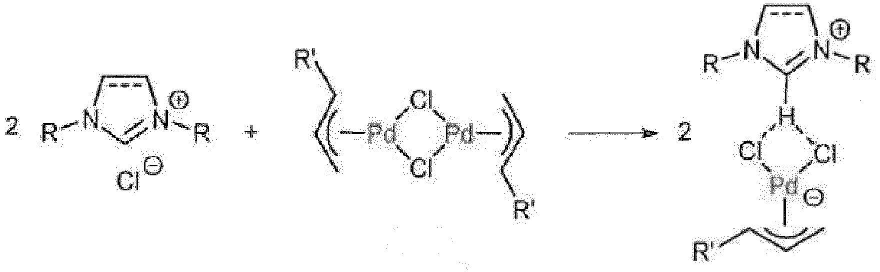

The method is rather robust with regard to the solvents used, so a wide variety of solvents can be employed. Suitable solvents are hydrocarbons, halogenated hydrocarbons, polar solvents, specifically straight-chained or cyclic haloalkyl, ether, ketones or combinations thereof. Thus, suitable solvents include, but are not limited to, toluene, pentane, hexane, heptane, cyclohexane, petrol ether, dichloromethane, chloroform, diethyl ether, methyl-*tert*.-butylether (2-methoxy-2-methylpropane), ethyl-*tert*.-butylether, cyclic ethers such as tetrahydrofurane or dioxane, acetone or combinations thereof.

The reaction can be easily carried out by providing the palladium educt [Pd(R3R10-(allyl-R12)-R11R20)(µ-X)]₂, the NHC salt, like an imidazolium salt, and the solvent into a suitable reactor and allow the reaction while stirring at a suitable reaction temperature for a suitable reaction time, which can be in general be selected from a wide range.

For example, the reaction might simply be carried out by refluxing the selected solvent, which would set the reaction temperature to the boiling point of the solvent, such as e.g. 111°C if the solvent used is toluene. In general, reaction temperatures of from 20°C to 111°C, in particular from 40°C to 90°C have proven to be suitable. A reaction time of 30 minutes to 24 hours, in particular of 1 to 5 hours depending on the educts and temperature used, has proven to be sufficient. Afterwards the solvent is removed, e.g. by distillation, and the product, a compound of formula 2 or 3 is obtained in yields of usually above 90%, often even 98% or 99%.

The isolated compound of formula 2 or 3 can be used to prepare a catalytically active compound of the type [Pd(NHC)(R3R10-(allyl-R12)-R11R20)X] having the formula 11 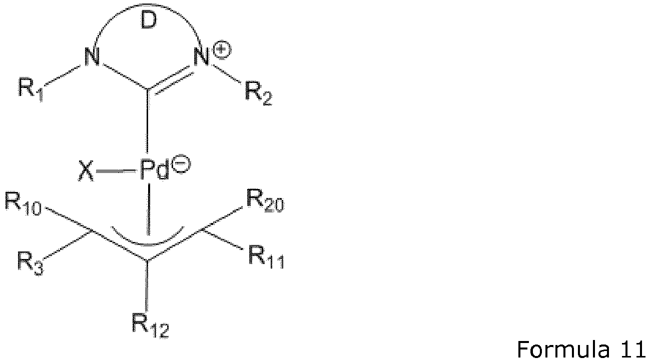 by addition of a base in presence of a solvent. More specifically, the method of making a complex of the type [Pd(NHC)(R3R10-(allyl-R12)-R11R20)X] comprises the steps of
- providing a compound according to any of formulae 2 or 3;
- reacting said compound with a base in the presence of a solvent;
- optionally isolating the resulting [Pd(NHC)(R3R10-(allyl-R12)-R11R20)X],
wherein NHC is the corresponding NHC ligand of the compound according to any of formulae 2 or 3 as defined above.

In one embodiment of the Invention, the compound of formula 11, which is abbreviated as [Pd(NHC)(R3R10-(allyl-R12)-R11R20)X], is different from compounds wherein all of R3, R10, R11, R12 and R20 are hydrogen; or
the compound of formula 11, which is abbreviated as [Pd(NHC)(R3R10-(allyl-R12)-R11R20)X], is different from compounds wherein R3, R10, R11 and R20 are hydrogen and R12 is methyl; or the compound of formula 11, which is abbreviated as [Pd(NHC)(R3R10-(allyl-R12)-R11R20)X], is different from compounds wherein X is chlorine.

More specifically, formula 11 is a compound of formula [Pd(NHC)(R3R10-(allyl-R12)-R11R20)X] wherein at least one of R3, R10, R11, R12 and R20 are different from hydrogen.

Even more specifically, formula 11 is a compound of formula [Pd(NHC)(R3R10-(allyl-R12)-R11R20)X] wherein R3, R10, R11 and R20 are hydrogen and R12 is different from hydrogen or methyl.

In another specific embodiment, formula 11 is a compound of formula [Pd(NHC)(R3R10-(allyl-R12)-R11R20)X] wherein X is different from chlorine.

In particular, formula 11 is a compound of formula [Pd(NHC)(R3R10-(allyl-R12)-R11R20)X] that is different from [N,N'-bis-((2,6-diisopropylphenyl)imidazol)-2-ylidene]Pd(η₃-allyl)Cl.

This method is rather robust with regard to the solvents used, so a wide variety of solvents can be employed. Suitable solvents are hydrocarbons, halogenated hydrocarbons, polar solvents, specifically straight-chained or cyclic haloalkyl, ether, ketones, alcohols or combinations thereof. Polar-aprotic or polar-protic solvents have been found to be useful.

Thus, suitable solvents include, but are not limited to, benzene, toluene, xylene, pentane, hexane, heptane, cyclohexane, petrol ether, dichloromethane, chloroform, diethyl ether, methyl-*tert*.-butylether (2-methoxy-2-methylpropane), ethyl-*tert*.-butylether, cyclic ethers such as tetrahydrofurane or dioxane, acetone, C2 to C6 alcohols such as ethanol, isopropanol or n-butanol or combinations thereof.

The base to can be a basic metal compound, such as an alkaline or earth-alkaline oxide, hydroxide or carbonate, or an organic base such as an amine. Specifically, suitable bases are potassium carbonate, sodium carbonate, potassium hydroxide, sodium hydroxide, pyridine or triethylamine. Reactions times can, in general, range from 1 to 12 hours, more specifically from 2 to 10 hours or from 3 to 8 hours, or from 3 to 6 hours. Reaction temperatures can mostly be made dependent on the boiling point of the solvent, such as 20°C to 115°C, or from 35°C to 100°C, or from 40°C to 80 °C or from 40 °C to 60°C.

The palladium complex of the type [Pd(NHC)(R3R10-(allyl-R12)-R11R20)X] so obtained can be used to catalyze a chemical reaction susceptible to catalysis by a palladium catalyst.

More specifically, this method of catalyzing a chemical reaction comprises the steps of
- Providing a complex of the type [Pd(NHC)(R3R10-(allyl-R12)-R11R20)X] with the method described above, and
- Employing the complex of the type [Pd(NHC)(R3R10-(allyl-R12)-R11R20)X] as catalyst in a chemical reaction, wherein NHC is the corresponding NHC ligand of the compound according to any of formulae 2 or 3 as defined above.

This method is particularly suitable to carry out a carbon-carbon or carbon-nitrogen coupling reaction in organic chemistry. More specifically, Buchwald-Hartwig coupling reactions, Suzuki-Miyaura coupling reactions, Heck reaction or Stille reaction as well as Negishi, Sonogashira and Hiyama coupling reactions can be carried out in this way.

It is possible to add a compound of any of formulae 2 or 3 as defined above to the reaction mixture of the coupling reaction to be catalyzed, together with a base, and then to carry out the coupling reaction as normally described in literature. In Heck reactions, for example, a base is normally added anyway. It might sometimes be necessary to adapt the amount of base in a few trials to achieve the best results.

It is also possible to prepare the complex of the type [Pd(NHC)(R3R10-(allyl-R12)-R11R20)X] from a compound of any of formulae 2 or 3 by the method as described above, which is by addition of a base in presence of a solvent, and then to add the complex of the type [Pd(NHC)(R3R10-(allyl-R12)-R11R20)X] to the reaction mixture. The the complex of the type [Pd(NHC)(R3R10-(allyl-R12)-R11R20)X] can be isolated and then added to the reaction mixture of the coupling reaction or the solution thereof might simply transferred to the reaction mixture of the coupling reaction, as the case may be.

### Examples

### 33. Synthesis and optimisation of [Pd(IPr)(cin)C!]

### Small scale:

IPr•HCl (50.0 mg, 0.117 mmol), [Pd(cin)(µ-Cl)]₂ (25.3 mg, 0.048 mmol), a magnetic stir bar and acetone (0.5 mL) were charged into a vial or roundbottomed flask, followed by K₂CO₃ (13.5 mg, 0.097 mmol). The mixture was stirred at 60 °C for 5 h. After the reaction was complete, the solvent was removed under vacuum. The residue was re-dissolved in dichloromethane (1-2 mL) and filtered through a pad of silica. The silica was washed with DCM (20 mL). The resulting solution was concentrated and dried under vacuum until a powder was obtained. In some cases, washing with pentane (5 mL) was necessary in order to remove the residual DCM. The product was obtained as a microcrystalline material in 98% (60.9 mg) yield.

### Large scale:

IPr•HCl (1.96 g, 4.63 mmol), [Pd(cin)(µ-Cl)]₂ (1 g, 1.93 mmol) and a magnetic stir bar were charged into a scintillation vial or round bottom flask. Acetone (20 mL) was then added, followed by K₂CO₃ (533 mg, 3.86 mmol) and the reaction mixture was refluxed for 24 h. The same general work up as above afforded the product in 95% (2.33g) yield.

**¹H NMR (400 MHz, CDCl₃):** δ (ppm) = δ 7.50 (t, *J*=7.7 Hz, 2H), 7.48-7.28 (d, *J*=7.7 Hz, 4H), 7.12 (m, 5H), 5.09 (m, 1H), 4.36 (d, *J*=12.9 Hz, 1H), 3.06 (m, 5H), 1.77(d, *J*=11.4 Hz, 1H), 1.43-1.36 (m, 12H), 1.16 (d, *J*=7.1 Hz, 12H).

**¹³C {¹H} NMR (100 MHz, CDCl₃):** δ (ppm) = δ 184.8 (C, carbene), 145.9 (C), 137.7 (C), 135.7 (C), 129.7 (CH) 128.0 (CH), 127.9 (CH), 127.1 (CH), 126.5 (CH), 124.0 (CH), 123.6 (CH), 108.6 CH), 90.0 (CH), 46.1 (CH₂), 33.9 (CH₂), 28.4 (CH), 26.0 (CH₃), 22.8 (CH₃).

**Elemental Analysis:** Expected C = 66.66, H = 7.15, N = 4.32. Found C = 66.73, H = 7.27, N = 4.38.

**Table S-1: Optimisation of the synthesis of [Pd(IPr)(cin)C!]**

| 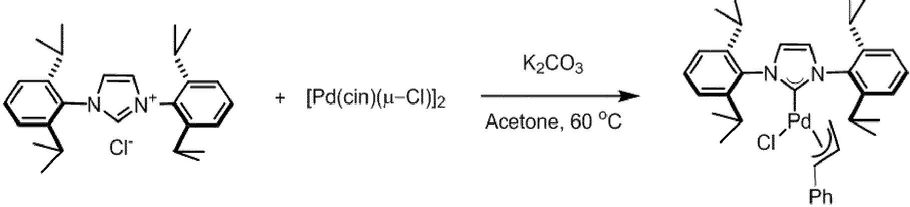 | | | | |
|---|---|---|---|---|
| Entry | IPr•HCl (equiv.) | K₂CO₃ (equiv.) | t (h) | Yield (%)^{a} |
| 1 | 1 | 2 | 3 | 94* |
| 2 | 1.1 | 2 | 3 | 100* |
| 3 | 1.2 | 1.1 | 5 | 98* |
| 4 | 1.3 | 1.1 | 5 | 100* |
| 5 | 1.5 | 1.1 | 5 | 100* |
| 6 | 1.2 | 0.9 | 5 | 99* |
| **7** | **1.2** | **1** | **5** | **98** |
| 8 | 1.2 | 1.3 | 5 | 100* |
| 9 | 1.2 | 1.5 | 5 | 96* |
| 10 | 1.2 | 0.6 | 5 | 65* |
| 11 | 1.2 | 0.4 | 5 | 69* |
| 12 | 1.2 | 0.2 | 5 | 52* |
| 13 | 1.2 | 1 | 5 | 94^{∗b} |
| 14 | 1.2 | 1 | 5 | 99^{∗c} |
| 15 | 1.2 | 1 | 6 | 99^{d} |

| | | | | |
|---|---|---|---|---|
| ^{∗1}H NMR shows impurities in the spectra. ^{a}Isolated yield. All reactions were carried out in air using technical grade acetone (0.235 M in respect to IPr•HCl). ^{b}Concentration = 0.117 M. ^{c}Concentration = 0.058M. ^{d}IPr•HCl and [Pd(cin)Cl]₂ were stirred in acetone for 1 h at 60 °C, then K₂CO₃ was added and the mixture was left to stir for 5h at 60 °C. | | | | |

### 34. Synthesis and optimisation of [Pd(IPr)(a!!y!)C!]

### Small scale:

IPr•HCl (50.0 mg, 0.117 mmol), [Pd(allyl)(µ-Cl)]₂ (17.8 mg, 0.048 mmol), a magnetic stir bar and acetone (0.5 mL) were charged into a vial or round bottom flask followed by K₂CO₃ (13.5 mg, 0.097 mmol). The mixture was stirred at 60 °C for 5 h. After the reaction was complete, the solvent was removed under vacuum. The residue was re-dissolved in dichloromethane (1-2 mL) and filtered through a pad of silica. The silica was washed with DCM (20 mL). The resulting solution was concentrated and dried in vacuum until a powder was obtained. In some cases washing with pentane (5 mL) was necessary in order to remove the residual DCM. The product was obtained as microcrystalline material in 85% (47.6 mg) yield.

### Large scale:

IPr•HCl (2.70 g, 6.55 mmol), [Pd(allyl)(µ-Cl)]₂ (1 g, 2.73 mmol) and a magnetic stir bar were charged into a scintillation vial or round bottom flask. Acetone (28 mL) was then added followed by K₂CO₃ (755 mg, 5.47 mmol) and the reaction mixture was refluxed for 10 h. The same general work up as above afforded the product in 92% (2.87 g) yield.

**¹H NMR (400 MHz, CDCl₃):** δ (ppm) = δ 7.42 (t, *J* = 7.32 Hz, 2H), 7.28 (m, 4H), 7.15 (s, 2H), 4.86-4.76 (m, 1H), 3.91 (dd, *J*=5.66 Hz, 1H), 3.16-3.03 (m, 2H), 3.04 (d, *J*=6.31 Hz, 1H), 2.89-2.82 (m, 2H), 2.77 (d, *J*=13.64 Hz, 1H), 1.59 (d, *J*=12.09 Hz, 1H), 1.39 (d, *J*=7.12 Hz, 6H), 1.34 (d, *J*=6.8 Hz, 6H), 1.18 (d, *J*=7.05, 6H), 1.09 (d, *J*=7.12 Hz, 6H).

**¹³C {¹H} NMR (100 MHz, CDCl₃):** δ (ppm) = δ 186.1 (C, carbene), 146.0 (C), 145.8 (C), 135.6 (C), 129.7 (CH), 123.9 (CH), 123.7 (CH), 123.6 (CH), 114.0 (CH), 72.3 (CH₂), 49.3 (CH₂), 28.4 (CH₂), 28.3 (CH₂) 26.4 (CH₃), 25.6 (CH₃), 22.7 (CH₃), 22.6 (CH₃).

**Elemental Analysis:** Expected C = 62.93, H = 7.39, N = 4.89, Found C = 63.06, H = 7.55, N = 5.02.

**Table S-2: Optimisation of the synthesis of [Pd(IPr)(allyl)CI]**

| 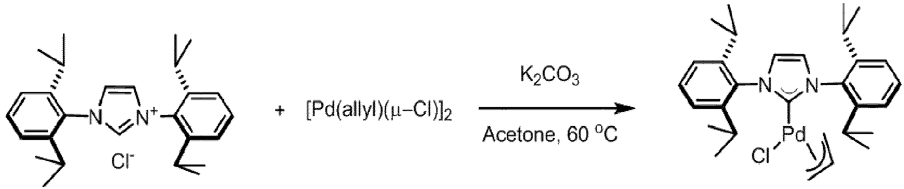 | | | | | |
|---|---|---|---|---|---|
| Entry | IPr•HCl (equiv.) | [Pd(allyl)Cl]₂ (equiv.) | K₂CO₃ (equiv.) | t (h) | Yield (%) |
| 1 | 1 | 0.5 | 2 | 5 | 85* |
| 2 | 1.1 | 0.5 | 2 | 5 | 75* |
| 3 | 1 | 0.55 | 1.1 | 5 | 60* |
| 4 | 1 | 0.6 | 1.1 | 5 | 57* |
| **5** | **1.2** | **0.5** | **1** | **5** | **85** |

| | | | | | |
|---|---|---|---|---|---|
| ^{∗ 1}H NMR shows impurities in the spectra. ^{a}Isolated yield after filtration through silica using DCM. All reactions were carried out in air using technical grade acetone (0.235 M). | | | | | |

### 35. Synthesis and optimisation of [Pd(IPr^{∗})(cin)Cl]

### Small scale:

IPr^{∗}•HCl (110 mg, 0.116 mmol), [Pd(cin)(µ-Cl)]₂ (30.0 mg, 0.058 mmol), a magnetic stir bar and acetone (0.5 mL) were charged into a vial or round bottom flask , the reaction was stirred at 60 °C for 1 h. Then K₂CO₃ (32.0 mg, 0.232 mmol) was added and the mixture was stirred at 60 °C for 24 h. After the reaction was complete, the solvent was removed under vacuum. The residue was re-dissolved in dichloromethane (1-2 mL) and filtered through a pad of silica. The silica was washed with DCM (20 mL). The resulting solution was concentrated and dried in vacuum, until a powder was obtained. In some cases washing with pentane (5 mL) was necessary in order to remove the residual DCM. The product was obtained as microcrystalline material in a 94% (127 mg) yield.

### Large scale:

IPr^{∗}•HCl (3.66 g, 3.86 mmol), [Pd(cin)(µ-Cl])₂ (1 g, 1.93 mmol) and a magnetic stir bar were charged into a scintillation vial or round bottom flask. Acetone (13 mL) was then added and the reaction was refluxed for 3 h (65 °C). Then, K₂CO₃ (1.07 g, 7.72 mmol) was added and the reaction mixture refluxed for 30 h. The same general work up as above afforded the product in 98% (4.23 g) yield.

**¹H NMR (400 MHz, CDCl₃):** δ (ppm) = δ 7.50 (d, *J* = 7.10 Hz, 2H), 7.41 (t, *J* = 7.42, 3H), 7.37 ( m, 16H), 7.08 (m, 14H), 6.82 (m, 14H), 6.09 (s, 2H), 5.70 (s, 2H), 5.31 (s, 2H), 5.01-4.96 (m, 1H), 4.64 (d, *J* = 12.8 Hz, 1H), 2.59 (d, J = 5.8 Hz, 1H), 2.23 (s, 6H).

**¹³C {¹H} NMR (100 MHz, CDCl₃):** δ (ppm) = δ 182.3 (C, carbene), 144.3 (C), 143.5(C), 143.4 (C) 141.1 (C), 140.3 (C), 138.1 (C), 137.5 (C), 135.6 (C), 130.3 (CH), 130.0 (CH), 129.0 (CH), 128.9 (CH), 128.3 (CH), 128.1 (CH), 127.9 (CH), 127.4 (CH), 126.9 (CH), 126.1 (CH), 126.1 (CH),123.2 (CH) 108.7 (C), 91.0 (C), 53.3 (CH), 47.1 (C), 21.7 (CH₃).

**Elemental Analysis:** Expected: C 79.85, H 5.67, N 2.39. Found: C 79.64, H 5.81, N 2.36.

**Table S-3: Optimisation of the synthesis of [Pd(IPr^{∗})(cin)Cl]**

| 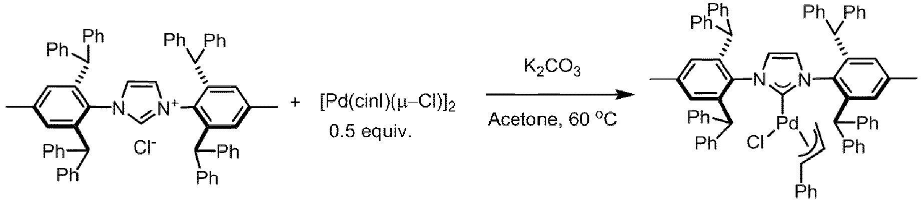 | | | | | |
|---|---|---|---|---|---|
| Entry | IPr^{∗}•HCl (equiv.) | K₂CO₃ (equiv.) | t (h) | Yield^{a} (%) | Acetone (M) |
| 1 | 1 | 2 | 5 | 80^{∗b} | 0.1158 |
| 2 | 1 | 2 | 20 | 81* | 0.1158 |
| 3 | 1 | 2 | 5 | 70* | 0.1158 |
| 4 | 1.2 | 1 | 5 | 84* | 0.105 |
| 5 | 1 | 2 | 5 | 74^{∗c} | 0.105 |
| 6 | 1 | 1 | 5 | 59* | 0.105 |
| 7 | 1 | 2 | 5 | 73^{∗c} | 0.105 |
| 8 | 1 | 1 | 5 | 60^{∗} | 0.105 |
| 9 | 1 | 2 | 5 | 78^{∗d} | 0.105 |
| 10 | 1 | 2 | 20 | 99^{d} | 0.105 |
| **11** | **1** | **2** | **24** | **94^{d}** | **0.2316** |
| 12 | 1 | 1.5 | 20 | 73^{∗} | 0.2316 |
| 13 | 1 | 2 | 24 | 93 | 0.105 |
| 14 | 1 | 2 | 24 | 98^{∗} | 0.0579 |

| | | | | | |
|---|---|---|---|---|---|
| ^{∗ 1}H NMR shows impurities in the spectra. ^{a}Isolated yield after filtration through silica using DCM. All reactions were carried out in air using technical grade acetone. ^{b}Clean NMR spectrum obtained but difficulties in reproducing it. ^{c}IPr^{∗}•HCl and [Pd(cin)Cl]₂ in acetone were stirred at 60 °C for 7 min, then K₂CO₃ was added and left to stir and heat for 5 h. ^{d}IPr^{∗}•HCl and [Pd(cin)Cl]₂ in acetone were stirred at 60 °C for 1 h, then K₂CO₃ was added and the mixture was stirred at 60 °C for the indicated time. ^{e}IPr^{∗}·HCl and [Pd(cin)Cl]₂ in acetone were stirred at 60 °C for 3 h, then KzCOs was added and the mixture was stirred at 60 °C for 24 h. | | | | | |

### 36. Synthesis of [Pd(SIPr)(cin)C!]

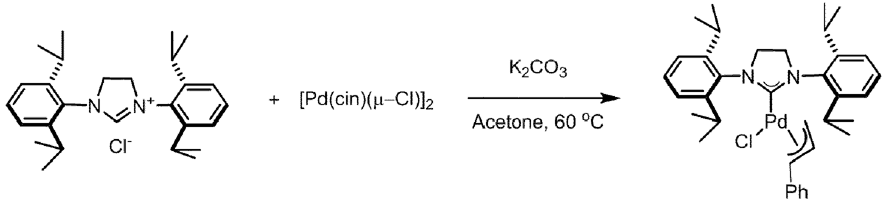

SIPr•HCl (110 mg, 0.234 mmol), [Pd(cin)(µ-Cl)]₂ (49.7 mg, 0.096 mmol) and a magnetic stir bar were charged into a vial or round bottom flask. Acetone (1 mL) was then added, followed by K₂CO₃ (26.9 mg, 0.192 mmol) and the mixture was left to stir for 5 h at 60 °C. The same general work up as above afforded the desired complex as microcrystalline material in 78% (122 mg) yield.

**¹H NMR (400 MHz, CDCl₃):** δ (ppm) =δ 7.38-7.35 (m, 2H), 7.26 (d, *J* = 7.52 Hz, 3H), 7.14-7.13 (m, 4H), 5.09-5.01 (m, 1H), 4.33 (d, *J* = 13.3 Hz, 1H), 4.02 (s, 4H), 3.44 (br. s, 1H), 1.43 (m, 12H), 1.27 (d, *J* = 6.31 Hz, 12H).

**¹³C {¹H} NMR (100 MHz, CDCl₃):** δ (ppm) = δ 212.1 (C), 147.2 (C), 137.7 (C), 136.4 (C), 129.1 (C), 128.3 (CH), 127.4 (CH), 126.8 (CH), 124.3 (CH), 109.2 (CH), 91.7 (CH), 54.1 (CH), 46.0 (CH₂), 28.6 (CH₃), 26.7 (CH₃).

**Elemental analysis:** Expected: C 66.76, H 7.72, N 4.21. Found: C 66.63, H 7.64, N 4.27.

### 37. Synthesis of [Pd(SIMes)(cin)Cl]

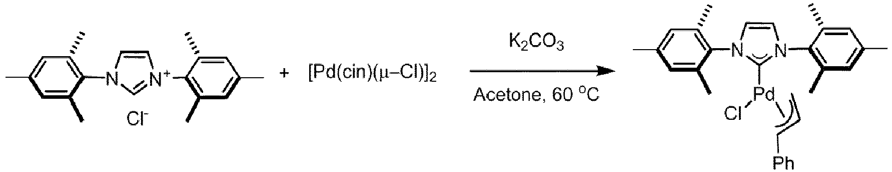

SIMes•HCl (100 mg, 0.292 mmol), [Pd(cin)(µ-Cl)]₂ (62.9 mg, 0.122 mmol), a magnetic stir bar and acetone (1.2 mL) were charged into a vial or round bottom flask , followed by K₂CO₃ (33.5 mg, 0.243 mmol). The mixture was stirred at 60 °C for 5 h. The general work up procedure was then followed, affording the product as microcrystalline material in 80% (135 mg) yield.

**¹H NMR (400 MHz, CDCl₃):** δ (ppm) =δ7.12 (m, 3H), 7.06 (m, 2H), 6.96 (d, *J* = 11.19 Hz, 4H), 5.30 (s, 1H), 5.12-5.04 (m, 1H), 4.27 (d, *J* = 12.96 Hz, 1H), 3.99 (m, 4H), 3.27 (d, *J* = 6.86 Hz, 1H), 2.44 (d, *J* = 15.24 Hz, 10H), 2.31 (s, 6H), 1.93 (m, 1H).

**¹³C {¹H} NMR (100 MHz, CDCl₃):** δ (ppm) = δ 210.9 (C, carbene), 138.0 (C), 137.8 (C), 136.3 (C), 135.7 (C), 129.1 (CH), 128.0 (CH), 127.5 (CH), 127.1 (CH), 126.4 (CH), 109.4 (CH), 92.1 (CH), 51.0 (CH₂), 46.5 (CH₂), 20.9 (CH₃).

**Elemental analysis:** Expected: C 66.76, H 7.72, N 4.21. Found: C 66.63, H 7.64, N 4.27.

### 38. Synthesis of [Pd(IPr^{∗2-Np})(cin)Cl]

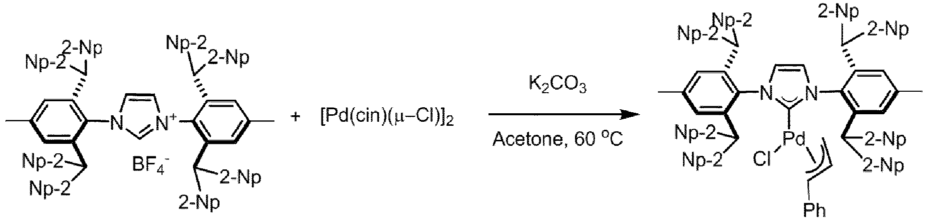

2-Np = 2-naphthtalene

IPr^{∗2-NP}•BF₄ (171.2 mg, 0.115 mmol), [Pd(cin)(µ-Cl)]₂ (30.0 mg, 0.058 mmol), a magnetic stir bar and acetone (1.1 mL) were charged into a vial or round bottom flask. The reaction was stirred at 60 °C for 1 h. Then K₂CO₃ (32.0 mg, 0.232 mmol) was added and the mixture was stirred at 60 °C for 24 h. The general work up procedure was followed; affording the product as microcrystalline material in 94% (170 mg) yield.

**¹H NMR (400 MHz, CDCl₃):** δ (ppm) =δ 7.86-7.84 (m, 12H), 7.71 (d, *J* = 6.95 Hz, 2H), 7.62 (d, *J* = 7.79 Hz, 4H), 7.67-7.51 (m, 7H), 7.47-7.41 (m, 10H), 7.39-7.29 (m, 9H), 7.26-7.16 (m, 14H), 7.16 (d, *J* = 15.6 Hz, 4H), 7.12 (s, 4H), 6.94 (d, *J* = 8 Hz, 2H), 6.60 (d, *J* = 9.68 Hz, 2H), 5.37 (s, 2H), 5.05 (d, *J* = 12.94 Hz, 1H), 3.15 (d, *J* = 7.1 Hz, 1H), 2.24 (s, 6H), 1.94 (d, *J* = 11.3 Hz, 1H).

**¹³C {¹H} NMR (100 MHz, CDCl₃):** δ (ppm) = δ182.0 (C, carbene), 141.2 (C), 138.5 (C), 135.9 (C), 133.0 (C), 132.9(C), 132.0 (CH), 131.8 (CH), 130.7 (CH), 129.2 (CH), 128.9 (CH), 128.6 (CH₂), 127.9 (CH₂), 127.8 (CH₂), 127.7 (CH₂), 127.4 (CH₂), 127.3 (CH₂), 127.0 (CH₂), 125.7 (CH₂), 125.6(CH₂), 125.5 (CH₂), 109.6 (CH₂), 92.1 (CH₂), 51.5 (CH₂), 47.1 (CH₂), 21.7 (CH₂).

**Elemental analysis:** Expected: C 84.01, H 5.19, N 1.78. Found: C 83.87, H 5.23, N 1.91.

### 39. Synthesis of [Pd(IPent)(cin)CI]

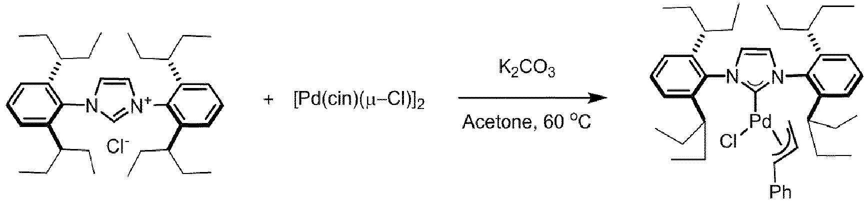

IPent•HCl (100 mg, 0.186 mmol), [Pd(cin)(µ-Cl)]₂ (48.2 mg, 0.093 mmol), a magnetic stir bar and acetone (0.8 mL) were charged into a vial or round bottom flask, the reaction was stirred at 60 °C for 1 h. Then, K₂CO₃ (51.4 mg, 0.372 mmol) was added and the mixture was stirred at 60 °C for 24 h. The general work up procedure was followed, affording the product as microcrystalline material in 85% (123 mg) yield.

**¹H NMR (400 MHz, CDCl₃):** δ (ppm) =δ 7.41-7.37 (m, 2H), 7.18-7.09 (m, 11 H), 5.21-5.13 (m, 1H), 4.41 (d, *J* = 13.4 Hz, 1H), 2.53 (br. m, 4H), 2.11-1.97 (m, 4H), 1.76-1.72 (m, 4H), 1.63 (m, 4H), 1.52-1.43 (m, 4H), 1.01 (m, 12H), 0.77 (m, 12H).

**¹³C {¹H} NMR (100 MHz, CDCl₃):** δ (ppm) = δ 181.5 (C, carbene), 143.6 (C), 137.5 (C) 137.5 (C), 128.8 (CH), 128.2 (CH), 127.2 (CH), 126.6 (CH), 124.8 (CH), 124.2 (CH), 108.2 (C), 91.4 (CH), 41.5(CH), 27.9 (CH₂), 27.2 (CH₂), 12.8 (CH₃), 11.2 (CH₃).

**Elemental analysis:** Expected: C 69.55 H 8.09, N 3.69. Found: C 69.49, H 8.19, N 3.80.

### 40. Synthesis of [Pd(IHept)(cin)CI]

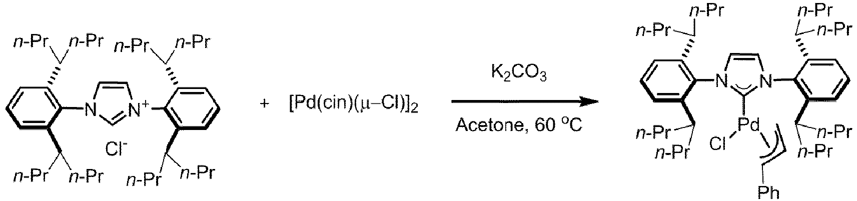

IHept•HCl (100 mg, 0.154 mmol), [Pd(cin)(µ-Cl)]₂ (39.8 mg, 0.076 mmol), a magnetic stir bar and acetone (0.7 mL) were charged into a vial or round bottom flask, the reaction was stirred for at 60 °C for 1 h. Then, K₂CO₃ (42.5 mg, 0.308 mmol) was added and the mixture was stirred at 60 °C for 24 h. The general work up procedure was followed, affording the product as microcrystalline material in 81% (109 mg) yield.

**¹H NMR (400 MHz, CDCl₃):** δ (ppm) = δ 7.40-7.36 (m, 2H), 7.19-7.13 (m, 9H), 7.06 (s, 2H), 5.18-5.10 (m, 1H), 4.44 (d, *J* = 13.8 Hz, 1H), 2.61 (br. s, 4H), 1.98-1.91 (m, 4H), 1.56-1.26 (m, 20H), 1.15-1.11 (m, 8H), 0.90 (t, *J* = 7.12 Hz, 7.28 Hz, 24H).

**¹³C {¹H} NMR (100 MHz, CDCl₃):** δ (ppm) = δ 181.4 (C, carbene), 144.2 (C), 137.5 (C), 137.2 (CH₂), 128.9 (CH), 128.1 (CH), 127.3 (CH), 126.5 (CH), 124.7 (CH), 124.2 (CH), 108.1 (C), 91.5 (CH), 39.1 (CH₃), 39.0 (CH), 37.8 (CH₂), 21.4 (CH₂), 20.3 (CH₂), 14.5 (CH₃).

**Elemental analysis:** Expected: C 71.62 H 8.90, N 3.21. Found: C 71.5, H 8.75, N 3.30.

### 41. Synthesis of [Pd(IPr^{∗OMe})(cin)Cl]

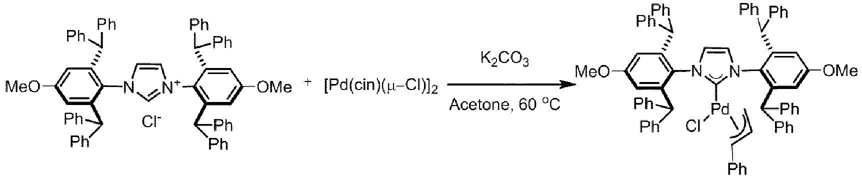

IPr^{∗OMe}•HCl (100 mg, 0.103 mmol), [Pd(cin)(µ-Cl)]₂ (26.7 mg, 0.051 mmol), a magnetic stir bar and acetone (0.5 mL) were charged into a vial or round bottom flask and the reaction was stirred at 60 °C for 1 h. Then, K₂CO₃ (28.5 mg, 0.206 mmol) was added and heated at 60 °C for 24 h. The general work up procedure was followed, affording the product as microcrystalline material in 85% (107 mg) yield.

**¹H NMR (400 MHz, CDCl₃):** δ (ppm) =δ 7.49 (d, *J* = 7.37 Hz, 2H), 7.40 (t, *J* = 7.09 Hz, 2H), 7.30-7.19 (m, 22H), 7.10-7.09 (m, 11H), 6.85 (d, *J* = 7.24 Hz, 4H), 6.80 (d, *J* = 6.57 Hz, 4H), 6.55 (s, 4H), 6.07 (s, 2H), 5.73 (s, 2H), 5.23 (s, 2H), 5.13-5.05 (m, 1H), 4.69-4.66 (m, 1H), 3.57 (s, 6H), 2.67-2.66 (m, 1H).

**¹³C {¹H} NMR (100 MHz, CDCl₃):** δ (ppm) = δ182.9 (C, carbene), 158.6 (C), 144.0 C), 130.2 (C), 129.0 (C), 128.9 (C), 128.4 (C), 128.1 (C), 128.0 (CH), 127.4 (CH), 127.0 (CH), 126.3 (CH), 126.1 (CH), 123.3 (CH), 114.8 (CH), 114.7 (CH), 108.7 (C), 91.7 (CH), 54.8 (CH₂), 51.4 (CH₃), 47.0 (CH₃).

**Elemental analysis:** Expected: C 77.8, H 5.44 N 2.33 Found: C 77.59 H 5.35 N 2.36.

### 42. Synthesis and analysis of the palladate intermediates

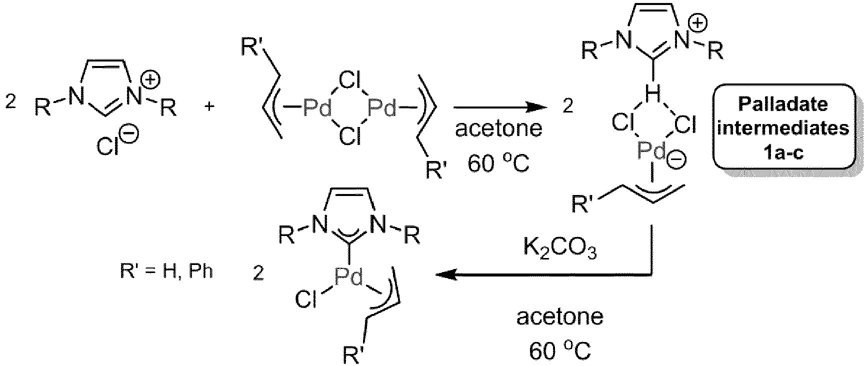

### 42.1. Synthesis of [IPrH][Pd(cin)Cl₂] (1a)

IPr•HCl (82.04 mg, 0.193 mmol), [Pd(cin)(µ-Cl)]₂ (50.0 mg, 0.096 mmol), a magnetic stir bar and acetone (0.8 mL) were charged into a vial. The mixture was stirred at 60 °C for 1 h. The solvent was removed and the product was dried under vacuum. The product was obtained as a dark orange powder in a 99% (132 mg) yield. Single crystals were grown by vapour diffusion of hexane into a solution of the complex in DCM.

**¹H NMR (400 MHz, CDCl₃):** δ (ppm) = 9.19 (s, 1H), 8.32 (d, *J* = 1.60 Hz, 2H), 7.56-7.52 (m, 2H), 7.46 (d, *J* = 7.44 Hz, 2H), 7.33 (d, *J* = 7.75 Hz, 4H), 7.21 (m, 3H), 5.66 (s, 1H), 4.46 (s, 1H), 3.83 (s, 1H), 2.90 (s, 1H), 2.48-2.41 (m, 4H), 1.27 (d, *J* = 6.81 Hz, 12H), 1.19 (d, *J* = 6.76 Hz, 12H).

**¹³C {¹H} NMR (100 MHz, CDCl₃):** δ (ppm) = δ 144.9 (C), 136.7 (CH), 131.8 (C), 129.7 (C), 128.4 (CH), 127.7 (CH), 127.5 (CH), 124.5 (CH), 105.0 (C), 28.8 (CH₃), 24.4 (CH₃), 23.7 (CH₃).

**Elemental analysis:** Expected: C 63.02, H 7.05 N 4.08 Found: C 62.92 H 7.14 N 4.15

### 42.2. Synthesis of [IPrH][Pd(allyl)Cl₂] (1b)

IPr•HCl (82.04 mg, 0.193 mmol), [Pd(allyl)(µ-Cl)]₂ (35.3 mg, 0.0965 mmol), a magnetic stir bar and acetone (0.8 mL) were charged to a vial. The mixture was stirred at 60 °C for 1 h. Then the solvent was removed and dried under vacuum. The product was obtained as a yellow powder in a 99% (117 mg).

**¹H NMR (400 MHz, CDCl₃):** δ (ppm) = 9.16 (s, 1H), 8.28 (d, *J* = 1.62 Hz, 2H), 7.54-7.50 (m, 2H), 7.32 (d, *J* = 7.17 Hz, 4H), 5.16-5.10 (m, 1H), 3.76 (s, 2H), 2.67 (d, *J* = 11.57 Hz, 2H), 2.48-2.44 (m, 4H), 1.27 (d, *J* = 6.79 Hz, 12H), 1.20 (d, *J* = 7.20 Hz, 12H).

**¹³C {¹H} NMR (100 MHz, CDCl₃):** δ (ppm) = δ144.9 (C), 136.8 (CH), 131.8 (C), 129.7 (C), 127.3 (CH), 124.4 (CH), 108.9 (C), 60.3 (CH), 28.8 (CH₃), 24.4 (CH₃), 23.8 (CH₃).

**Elemental analysis:** Expected: C 59.07, H 7.27 N 4.59, Found: C 58.90 H 7.17 N 4.57.

### 42.3. Synthesis of [IPr^{∗}H][Pd(cin)Cl₂] (1c)

IPr^{∗}•HCl (109.9 mg, 0.115 mmol), [Pd(cin)(µ-Cl)]₂ (30.0 mg, 0.058 mmol), a magnetic stir bar and acetone (1.1 mL) were charged to a vial. The mixture was stirred at 60 °C for 5 h. Then, the solvent was removed and dried under vacuum. The product was obtained as a yellow powder in a 99% (139 mg). Single crystals were grown by vapour diffusion of hexane into a solution of the complex in DCM.

**¹H NMR (400 MHz, CDCl₃):** δ (ppm) = δ 12.52 (s, 1H), 7.31-7.23 (m, 17H), 7.19-7.06 (m, 17H), 6.77-6.75 (m, 10H), 5.87-5.75 (br. m, 1H), 5.41 (s, 4H), 5.33 (s, 2H), 4.68-3.68 (m, 2H), 3.15-2.45 (m, 1H), 2.18 (s, 6H).

**¹³C {¹H} NMR (100 MHz, CDCl₃):** δ (ppm) 142.6 (C), 142.5 (C), 142.1 (C), 140.7 (C), 140.6 (CH), 130.7 (C), 130.2 (CH), 129.1 (C), 128.3 (C), 127.9 (CH), 126.6 (CH), 126.5 (CH), 122.8 (CH), 105.5 (CH), 51.0 (CH₃), 21.7(CH₃).

**Elemental analysis:** Expected: C 77.38 H 5.66 N 2.31 Found: C 77.25 H 5.47 N 2.36.

### 43. The Suzuki-Miyaura coupling

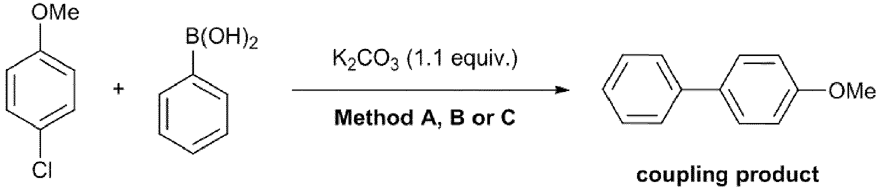

### 43.1. Method A:¹

The vial containing the precatalyst was transferred into the glovebox. Inside the glovebox, the vial was charged with a stirring bar, 4-chloroansiole (0.5 mmol), phenylboronic acid (1 equiv.) and K₂CO₃ (1.1 equiv.). The vial was then sealed with a screw cap fitted with a septum. The reaction mixture was taken outside the glovebox. 1 mL of an ethanol/water (1:1) mixture (degassed) was added and the reaction was left to stir at 80 °C for 4 h.

### 43.2. Method B:

The vial containing the precatalyst was transferred into the glovebox. Inside the glovebox, the vial was charged with a stirring bar, 4-chloroansiole (0.5 mmol), phenylboronic acid (1 equiv.) and K₂CO₃ (1.1 equiv.). The vial was sealed with a screw cap fitted with a septum. The reaction mixture was taken outside the glovebox. 1 mL of ethanol (degassed) was added and the reaction was left to stir at RT for 20 h.

### 43.3. Methods C1, C3:

The vial was charged with a stirring bar, **1a-c** (0.3 mol%) and K₂CO₃ (1.1 equiv.) under argon. the mixture was stirred for; 1 h at 60 °C (**C1**) or 30 min at 60 °C (**C3**), then 4-chloroansiole (0.5 mmol) and phenylboronic acid (1 equiv.) were added and the reaction was left stirring at RT for 20 h.

For entries 7-9: Pd dimer (0.15 mol%) and NHC·HCl (0.3 mol%) were used instead of **1a-c.**

### 43.4. Methods C2:

The vial containing the **1a-c** (0.3 mol%) was transferred into the glovebox. Inside the glovebox, the vial was charged with a stirring bar, 4-chloroansiole (0.5 mmol), phenylboronic acid (1 equiv.) and K₂CO₃ (1.1 equiv.). The vial was sealed with a screw cap fitted with a septum. The reaction mixture was taken outside the glovebox. 1 mL of ethanol (degassed) was added and the reaction was stirred for 1 h at 60 °C, then 20 h at RT.

### Coupling product: 4-methoxy-1,1'-biphenyl

**¹H NMR (400 MHz, CDCl₃):** δ (ppm) = 7.59-7.50 (m, 4H), 7.45-7.39 (m, 2H), 7.33-7.28 (m, 1H), 7.02-6.95 (m, 2H), 3.86 (s, 3H).

Analytical data obtained was in accordance with the reported values.²

## Claims

1. A compound of formula 2 or 3 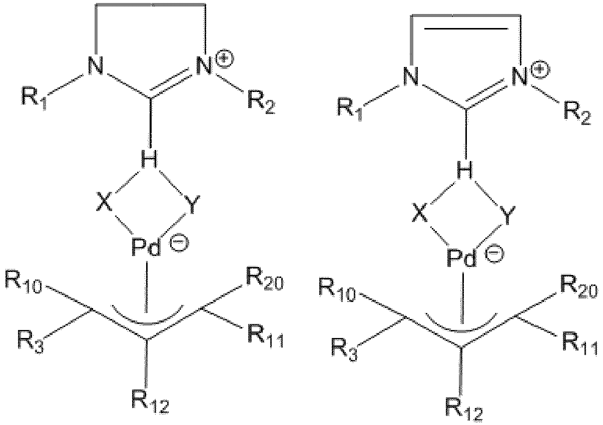
wherein R3, R11 and R12 being selected from the group consisting of hydrogen, methyl, ethyl, propyl, isopropyl, butyl, tert.-butyl, sec.-butyl, phenyl, naphthyl or combinations thereof;
R10 and R20 are hydrogen or R10 and R20 are forming a five or six-membered unsaturated ring suitable for η³-coordination of the palladium, the five or six-membered unsaturated ring may be fused with at least one benzene ring;
X and Y are the same and are halogen, acetate, fluoroacetate, tetra-fluoroborate;
R1 and R2 are each independently selected from the group consisting of formula 4 to formula 8 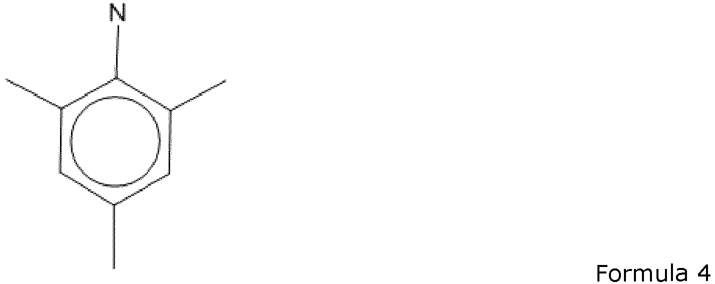
2,4,6-trimethyl phenyl 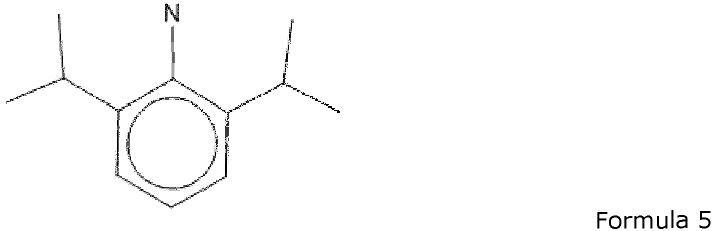
2,6-diisopropylphenyl 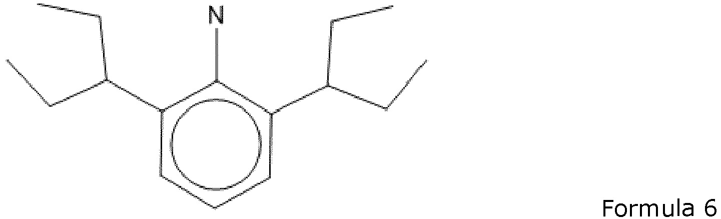
2,6-bis(diethylmethyl)-phenyl 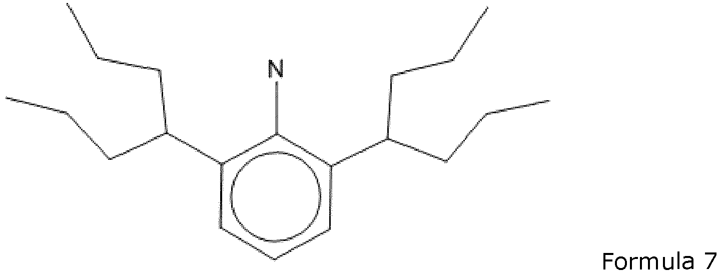
2,6-bis(dipropylmethyl)-phenyl 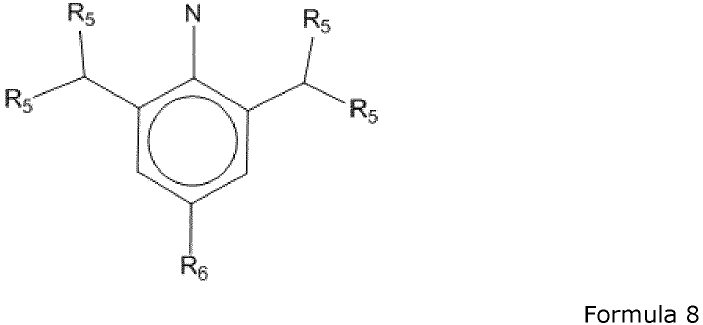
2,6-bis(diphenylmethyl)-4-methylphenyl, 2,6-bis(diphenylmethyl)-4-methoxyphenyl, 2,6-bis(dinaphthylmethyl)-4-methylphenyl wherein R5 is phenyl, naphthyl, R6 is hydrogen, methyl or methoxy and N indicates the nitrogen atom of the heterocyclic ring in formulae 2 to 3 to which the substituted aryl ring is linked.

2. A compound according to claim 1, R1 and R2 being the same.

3. A compound according to any of claims 1 or 2, R12 being hydrogen.

4. A compound according to any of claims 1 to 3, R11 being hydrogen.

5. A compound according to any of claims 1 to 4, R3 being selected from the group consisting of hydrogen, methyl, ethyl, propyl, isopropyl, butyl, tert.-butyl, sec.-butyl, phenyl, naphthyl or combinations thereof, R11 and R12 being hydrogen and R10 and R20 together form a five membered unsaturated ring fused with a benzene ring so as to form an indene ring system.

6. A compound according to any of claims 1 to 5, wherein the group R3R10-(allyl-R12)-R11R20 can be cinnamyl or allyl or of formula 10 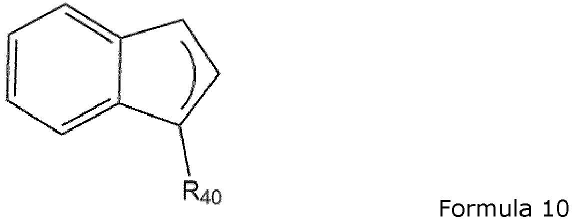 with R40 being phenyl, naphthyl, p-methylphenyl, methyl, ethyl propyl, isopropyl, butyl or tert.-butyl

7. A method for making compounds of any of claims 1 to 6, wherein an imidazolium salt is reacted with the palladium dimer [Pd(R3R10-(allyl-R12)-R11R20)(µ-X)]₂ in a solvent, wherein R3 and X are as defined above.

8. The method of claim 7, the solvent being a hydrocarbon, halogenated hydrocarbon or polar solvent, specifically straight-chained or cyclic haloalkyl, ether, ketone or combinations thereof.

9. The method of claim 7 or 8, wherein the reaction temperature is from 20°C to 111°C, in particular from 40°C to 90°C.

10. The method of any of claims 7 to 9, wherein the reaction time is from 30 minutes to 24 hours, in particular from 1 hour to 5 hours.

11. The method of any of claims 7 to 10, the compound R3R10-(allyl-R12)-R11R20 being a compound of formula 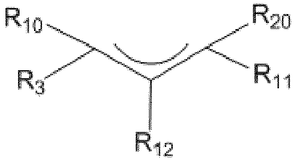 with R3, R10, R11, R12 and R20 as defined above.

12. A method of making a complex of the type [Pd(NHC)(R3R10-(allyl-R12)-R11R20)X] comprising the steps of
- providing a compound according to any of claims 1 to 6;
- reacting said compound with a base in the presence of a solvent;
- optionally isolating the resulting [Pd(NHC)(R3R10-(allyl-R12)-R11R20)X],
wherein NHC is the corresponding NHC ligand of the compound according to any of claims 1 to 5 and X and R3 are defined as above.

13. The method of claim 12, wherein the solvent is a polar-aprotic solvent or a polar-protic solvent, in particular a haloalkane, an aromatic solvent such as benzene, toluene or xylene, ethers such as diethyl ether, tetrahydrofurane or MTBE, ketones such as acetone or C2 to C6 alcohols such as ethanol, isopropanol or n-butanol.

14. The method of claim 12 or 13, the base being a basic metal compound or an organic base, in particular an alkaline or earth-alkaline compound.

15. The method of any of claims 12 to 14, the base being an alkaline or earth-alkaline oxide, hydroxide or carbonate or an amine, in particular potassium carbonate, sodium carbonate, potassium hydroxide, sodium hydroxide, pyridine or triethylamine.

## Patentansprüche

1. Eine Verbindung der Formel 2 oder 3 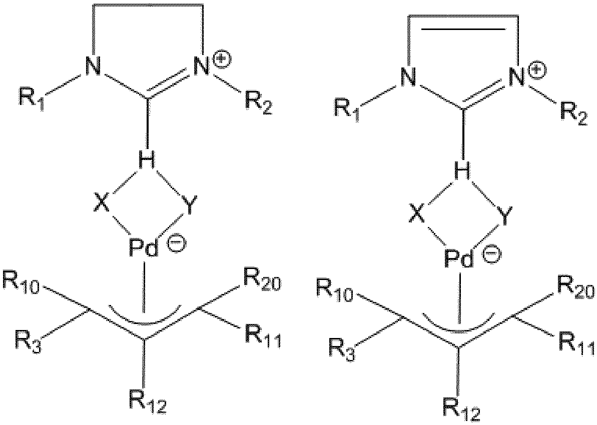
worin R3, R11 und R12 ausgewählt sind aus der Gruppe bestehend aus Wasserstoff, Methyl, Ethyl, Propyl, Isopropyl, Butyl, tert.-Butyl, sec.-Butyl, Phenyl, Naphthyl oder Kombinationen davon;
R10 und R20 sind Wasserstoff oder R10 und R20 bilden einen fünf- oder sechsgliedrigen ungesättigten Ring, der für die η³ -Koordination des Palladiums geeignet ist, wobei der fünf- oder sechsgliedrige ungesättigte Ring mit mindestens einem Benzolring kondensiert sein kann;
X und Y sind gleich und bedeuten Halogen, Acetat, Fluoracetat, Tetrafluoroborat;
R1 und R2 sind jeweils unabhängig voneinander ausgewählt aus der Gruppe bestehend aus Formel 4 bis Formel 8 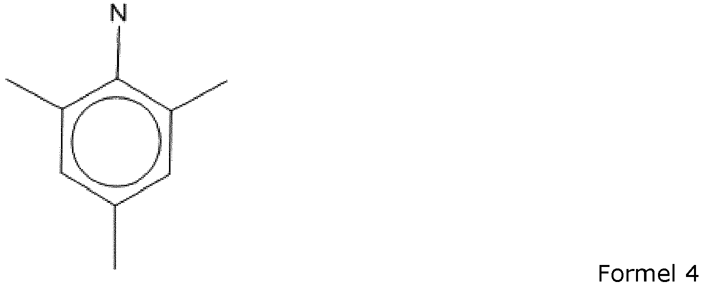
2,4,6-Trimethylphenyl 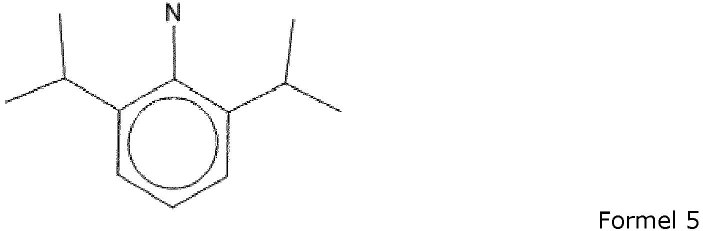
2,6-Diisopropylphenyl 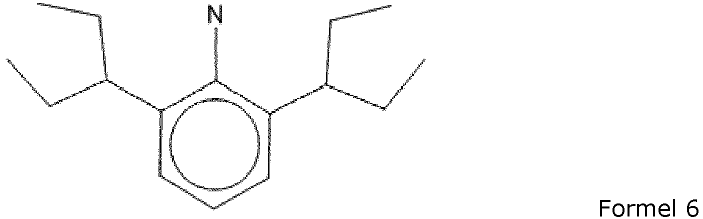
2,6-Bis(diethylmethyl)-phenyl 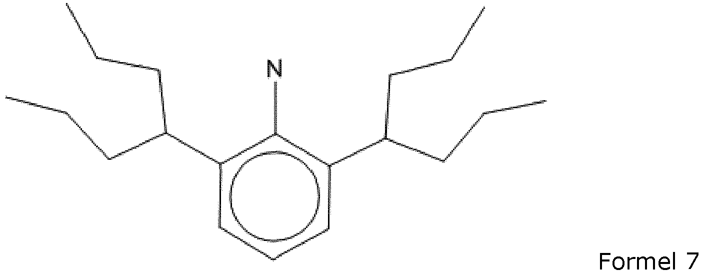
2,6-Bis(dipropylmethyl)-phenyl 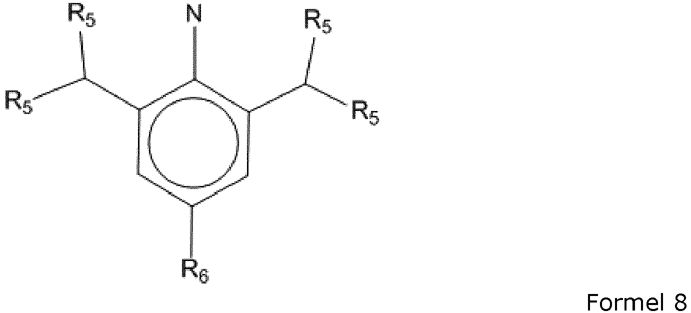
2,6-Bis(diphenylmethyl)-4-methylphenyl, 2,6-Bis(diphenylmethyl)-4-methoxyphenyl, 2,6-Bis(dinaphthylmethyl)-4-methylphenyl
worin R5 Phenyl, Naphthyl ist, R6 Wasserstoff, Methyl oder Methoxy ist und N das Stickstoffatom des heterocyclischen Rings in den Formeln 2 bis 3 bezeichnet, an das der substituierte Arylring gebunden ist.

2. Eine Verbindung nach Anspruch 1, wobei R1 und R2 gleich sind.

3. Eine Verbindung nach einem der Ansprüche 1 oder 2, wobei R12 Wasserstoff ist.

4. Verbindung nach einem der Ansprüche 1 bis 3, wobei R11 Wasserstoff ist.

5. Verbindung nach einem der Ansprüche 1 bis 4, wobei R3 ausgewählt ist aus der Gruppe bestehend aus Wasserstoff, Methyl, Ethyl, Propyl, Isopropyl, Butyl, tert.-Butyl, sek.-Butyl, Phenyl, Naphthyl oder Kombinationen davon, R11 und R12 Wasserstoff sind und R10 und R20 zusammen einen fünfgliedrigen ungesättigten Ring bilden, der mit einem Benzolring kondensiert ist, um ein Inden-Ringsystem zu bilden.

6. Verbindung nach einem der Ansprüche 1 bis 5, wobei die Gruppe R3R10-(Allyl-R12)-R11R20 Cinnamyl oder Allyl sein kann oder die Formel 10 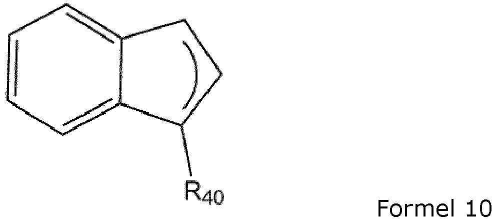 wobei R40 Phenyl, Naphthyl, p-Methylphenyl, Methyl, Ethylpropyl, Isopropyl, Butyl oder tert.-Butyl ist

7. Verfahren zur Herstellung von Verbindungen nach einem der Ansprüche 1 bis 6, wobei ein Imidazoliumsalz mit dem Palladiumdimer [Pd(R3R10-(Allyl-R12)-R11R20)(µ-X)₂ in einem Lösungsmittel umgesetzt wird, wobei R3 und X wie oben definiert sind.

8. Verfahren nach Anspruch 7, wobei das Lösungsmittel ein Kohlenwasserstoff, ein halogenisierter Kohlenwasserstoff oder ein polares Lösungsmittel ist, insbesondere geradkettiges oder zyklisches Halogenalkyl, Ether, Keton oder Kombinationen davon.

9. Verfahren nach Anspruch 7 oder 8, wobei die Reaktionstemperatur zwischen 20°C und 111°C, insbesondere zwischen 40°C und 90°C liegt.

10. Verfahren nach einem der Ansprüche 7 bis 9, wobei die Reaktionszeit zwischen 30 Minuten und 24 Stunden, insbesondere zwischen 1 Stunde und 5 Stunden, beträgt.

11. Verfahren nach einem der Ansprüche 7 bis 10, wobei die Verbindung R3R10-(Allyl-R12)-R11R20 eine Verbindung der Formel 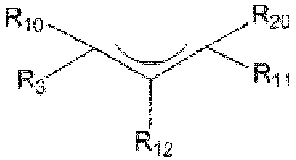 wobei R3, R10, R11, R12 und R20 wie oben definiert sind.

12. Verfahren zur Herstellung eines Komplexes vom Typ [Pd(NHC)(R3R10-(Allyl-R12)-R11R20)X], das die folgenden Schritte umfasst
- Bereitstellung einer Verbindung nach einem der Ansprüche 1 bis 6;
- Umsetzung der Verbindung mit einer Base in Gegenwart eines Lösungsmittels;
- gegebenenfalls Isolierung des resultierenden [Pd(NHC)(R3R10-(Allyl-R12)-R11R20)X],
worin NHC der entsprechende NHC-Ligand der Verbindung nach einem der Ansprüche 1 bis 5 ist und X und R3 wie oben definiert sind.

13. Verfahren nach Anspruch 12, wobei das Lösungsmittel ein polar-aprotisches Lösungsmittel oder ein polar-protisches Lösungsmittel ist, insbesondere ein Halogenalkan, ein aromatisches Lösungsmittel wie Benzol, Toluol oder Xylol, Ether wie Diethylether, Tetrahydrofuran oder MTBE, Ketone wie Aceton oder C2- bis C6-Alkohole wie Ethanol, Isopropanol oder n-Butanol.

14. Verfahren nach Anspruch 12 oder 13, wobei die Base eine basische Metallverbindung oder eine organische Base, insbesondere eine Alkali- oder Erdalkaliverbindung ist.

15. Verfahren nach einem der Ansprüche 12 bis 14, wobei die Base ein Alkali- oder Erdalkalioxid, -hydroxid oder -carbonat oder ein Amin ist, insbesondere Kaliumcarbonat, Natriumcarbonat, Kaliumhydroxid, Natriumhydroxid, Pyridin oder Triethylamin.

## Revendications

1. Composé de formule 2 ou 3 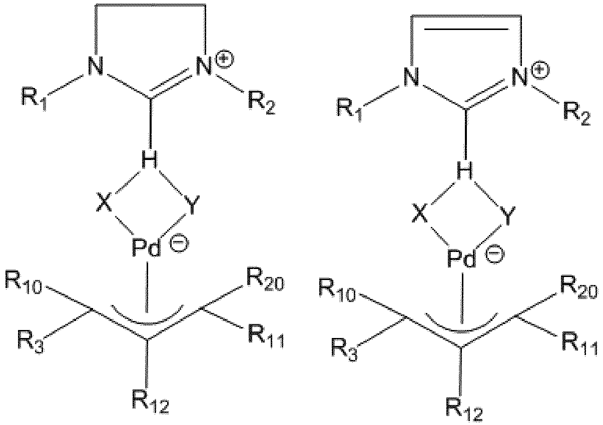
où R3, R11 et R12 sont choisis dans le groupe constitué par l'hydrogène, le méthyle, l'éthyle, le propyle, l'isopropyle, le butyle, le tert.-butyle, le sec.-butyle, le phényle, le naphtyle ou des combinaisons de ceux-ci ;
R10 et R20 sont de l'hydrogène ou R10 et R20 forment un anneau insaturé à cinq ou six chaînons convenant à la coordination η³ du palladium, l'anneau insaturé à cinq ou six chaînons peut être fusionné avec au moins un anneau benzénique ;
X et Y sont identiques et représentent un halogène, un acétate, un fluoroacétate, un tétrafluoroborate ;
R1 et R2 sont chacun indépendamment choisi dans le groupe constitué de la formule 4 à la formule 8 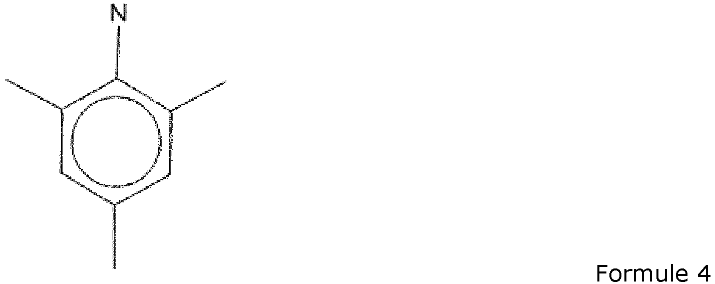
2,4,6-triméthylphényle 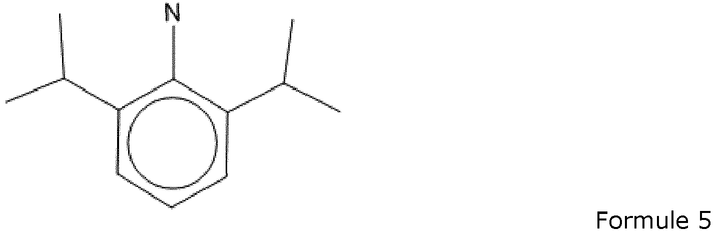
2,6-diisopropylphényle 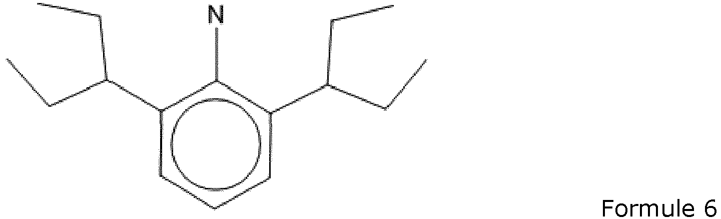
2,6-bis(diéthylméthyl)-phényle 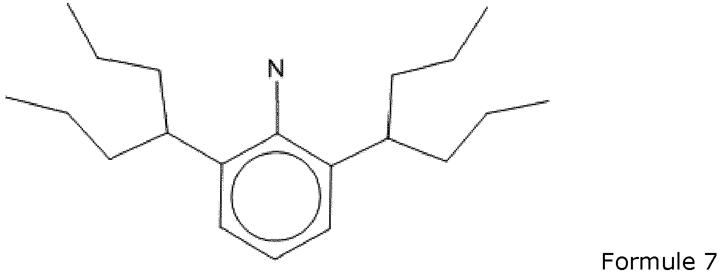
2,6-bis(dipropylméthyl)-phényle 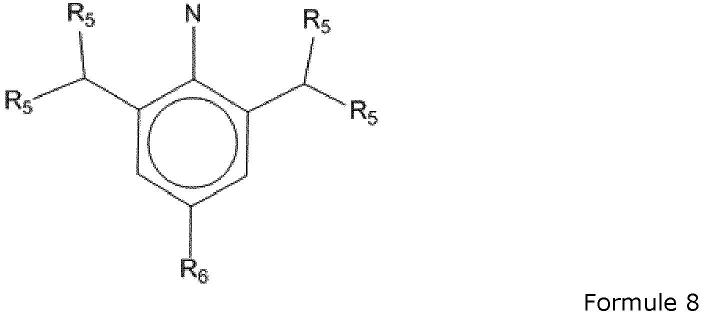
2,6-bis(diphénylméthyl)-4-méthylphényle, 2,6-bis(diphénylméthyl)-4-méthoxyphényle, 2,6-bis(dinaphylméthyl)-4-méthylphényle
où R5 est un phényle, un naphtyle, R6 est un hydrogène, un méthyle ou un méthoxy et N indique l'atome d'azote de l'anneau hétérocyclique des formules 2 à 3 auquel l'anneau arylique substitué est lié.

2. Composé selon la revendication 1, R1 et R2 étant identiques.

3. Composé selon l'une des revendications 1 ou 2, R12 étant un hydrogène.

4. Composé selon l'une des revendications 1 à 3, R11 étant l'hydrogène.

5. Composé selon l'une des revendications 1 à 4, R3 étant choisi dans le groupe constitué par l'hydrogène, le méthyle, l'éthyle, le propyle, l'isopropyle, le butyle, le tert.-butyle, le sec.-butyle, le phényle, le naphtyle ou des combinaisons de ceux-ci, R11 et R12 étant l'hydrogène et R10 et R20 formant ensemble un anneau insaturé à cinq membres fusionné avec un anneau de benzène de manière à former un système d'anneau indène.

6. Composé selon l'une des revendications 1 à 5, dans lequel le groupe R3R10-(allyl-R12)-R11R20 peut être un cinnamyle ou un allyle ou de formule 10 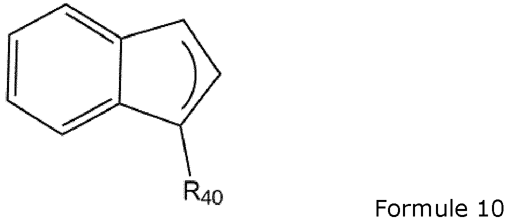 R40 étant un phényle, un naphtyle, un p-méthylphényle, un méthyle, un éthylpropyle, un isopropyle, un butyle ou un tert.-butyle

7. Procédé de fabrication des composés de l'une des revendications 1 à 6, dans lequel un sel d'imidazolium réagit avec le dimère de palladium [Pd(R3R10-(allyl-R12)-R11R20)(µ-X)]₂ dans un solvant, dans lequel R3 et X sont tels que définis ci-dessus.

8. Méthode de la revendication 7, le solvant étant un hydrocarbure, un hydrocarbure halogéné ou un solvant polaire, en particulier un haloalkyle linéaire ou cyclique, un éther, une cétone ou des combinaisons de ceux-ci.

9. Méthode de la revendication 7 ou 8, dans laquelle la température de réaction est comprise entre 20°C et 111°C, en particulier entre 40°C et 90°C.

10. La méthode de l'une des revendications 7 à 9, dans laquelle le temps de réaction est compris entre 30 minutes et 24 heures, en particulier entre 1 heure et 5 heures.

11. Procédé selon l'une des revendications 7 à 10, le composé R3R10-(allyl-R12)-R11R20 étant un composé de formule 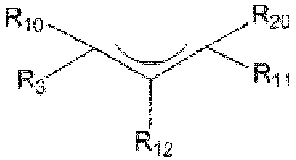 avec R3, R10, R11, R12 et R20 tels que définis ci-dessus.

12. Procédé de préparation d'un complexe du type [Pd(NHC)(R3R10-(allyl-R12)-R11R20)X] comprenant les étapes suivantes
- fournir un composé selon l'une des revendications 1 à 6 ;
- réaction dudit composé avec une base en présence d'un solvant ;
- éventuellement isoler le [Pd(NHC)(R3R10-(allyl-R12)-R11R20)X] résultant,
dans lequel NHC est le ligand NHC correspondant du composé selon l'une des revendications 1 à 5 et X et R3 sont définis comme ci-dessus.

13. Procédé selon la revendication 12, dans lequel le solvant est un solvant polaire-aprotique ou un solvant polaire-protique, en particulier un haloalcane, un solvant aromatique tel que le benzène, le toluène ou le xylène, des éthers tels que l'éther diéthylique, le tétrahydrofurane ou le MTBE, des cétones telles que l'acétone ou des alcools en C2 à C6 tels que l'éthanol, l'isopropanol ou le n-butanol.

14. Procédé selon la revendication 12 ou 13, la base étant un composé métallique basique ou une base organique, en particulier un composé alcalin ou alcalino-terreux.

15. Méthode de l'une des revendications 12 à 14, la base étant un oxyde, un hydroxyde ou un carbonate alcalin ou alcalino-terreux ou une amine, en particulier le carbonate de potassium, le carbonate de sodium, l'hydroxyde de potassium, l'hydroxyde de sodium, la pyridine ou la triéthylamine.
